# EUROPEAN PATENT SPECIFICATION

(11) **EP 0 660 018 B1**
(45) Date of publication and mention of the grant of the patent: **28.05.1997**
(21) Application number: 94309687.5
(22) Date of filing: 22.12.1994
(51) Int. Cl.: F16L 3/127, F16L 3/137

(54) **A tie**
Band
Bande

(30) Priority: 22.12.1993 JP 73556/93 U
(43) Date of publication of application: 28.06.1995
(73) Proprietor: Kato Hatsujyo Co., Ltd., Yokohama-shi Kanagawa-ken (JP)
(72) Inventor: Koike, Takashi, c/o Kato Hatsujyo Co., Ltd., Yokohama-shi, Kanagawa-ken (JP)
(74) Representative: West, Alan Harry

(56) References cited:
- FR-A- 2 380 456
- US-A- 2 969 216
- US-A- 3 550 219
- US-A- 4 632 343

## Description

The present invention relates to a tie for mounting one or more elongate elements and particularly, but not exclusively for mounting such an element or elements to a vehicle.

Examples of conventional ties used as harness clips are disclosed in Japanese Laid-open Patent Application No. 59-219508, Japanese Laid-open Patent Application No. 60-189682 and Japanese Laid-open Utility Model Application No. 63-22410.

The harness clip disclosed in Japanese Laid-open Patent Application No. 59-219508 comprises a flange portion, a leg portion having a stopper leg on one side of the flange portion, and a band portion provided on the other side of the flange portion.

In use, the band portion holding a harness is inserted into a through-hole in the flange portion. In order to mount the harness, the band portion is inserted into an opening in a panel. When so inserted, it is urged outward against the peripheral edge portion of the opening by an elastic force generated in the stopper leg. The band portion thus cooperates with the stopper leg to form a leg portion of the tie by which the tie is mounted in an opening in a panel.

Additionally, the band portion comprises a stopper surface provided with a plurality of projections and depressions which are engageable with the peripheral edge portion of the opening so as to be fixed thereby.

The harness clip disclosed in Japanese Laid-open Utility Model Application No. 60-189682 comprises a flange portion (base of the harness clip) provided with a through-hole, two resilient legs which define an anchor shape, one of those legs having an insert hole defined near a base portion thereof, and an elongate band portion. The band portion is insertable through the through-hole and insert hole and is provided with teeth for engaging a peripheral edge portion of the insert hole when so inserted whereby the band portion can be securely held.

The harness clip disclosed in Japanese Laid-open Utility Model Application No. 63-22410 comprises a body portion having resilient wing means, an elongate band portion extending from a face of said body portion, a strut portion extending from said body portion oppositely of said band portion, two resilient legs connected with said strut portion and a wall portion provided on said strut portion, said legs being cooperable with said wing means for gripping around an aperture in use of the tie, said body portion and wall portion being provided with a respective through-hole which through-holes are substantially aligned, said band portion being insertable, in use, successively through said through holes to define a loop to enclose one or more elongate elements and having a latching portion adapted for cooperably engaging projection means of said body portion for securing said loop.

The harness clip of No. 59-219508, however, has the disadvantage that when mounted to a panel, the band portion in the region of the opening in which the tie is mounted is urged outwardly against the peripheral edge portion of the opening by the elastic force of the stopper leg and is held only at a point of the peripheral edge portion. Thus, the leading end of the band portion is free and is easily bent.

If the leading end of the band portion is bent, this interferes with the periphery of the panel opening in mounting the harness clip to the panel thereby making the harness clip difficult to mount. Also, even after mounting of the harness clip, the bent leading end of the band portion can obstruct mounting of other components.

The harness clip of No. 60-189682 has the disadvantage that when the band portion is inserted through the insert hole (formed near the base portion of one leg), that leg becomes more difficult to deform and thus, since only one of the legs is readily deformed insertion into a mount hole in a panel is less easy.

The harness clip of No. 63-22410 has a rigid stopper projection formed in the through-hole in the body portion and the band portion has stopper claws projecting therefrom. The stopper claws are elastically deformable for engaging with the stopper projection. A disadvantage of this arrangement is that in order to be elastically deformable the stopper claws are relatively long and thus the band portion is relatively thick in the region of the stopper claws.

Since the band portion is insertable through the hole formed through the wall portion, this hole has to be sized accordingly. The resilient anchor stopper legs of this harness clip project from the wall portion with the band portion passing therebetween and thus the minimum distance between the stopper legs is at least in part determined by the thickness of the band portion. Accordingly, a problem with this harness clip is that the design as a whole is not compact.

An object of the invention is to at least partially overcome the above-mentioned disadvantages of prior art harness clips.

Accordingly the invention provides a tie for mounting one or more elongate elements, the tie comprising a body portion having resilient wing means, an elongate band portion extending from a face of said body portion, a strut portion extending from said body portion oppositely of said band portion, two resilient legs connected with said strut portion and a wall portion provided on said strut portion, said legs being cooperable with said wing means for gripping around an aperture in use of the tie, said body portion and wall portion being provided with a respective through-hole which through-holes are substantially aligned, said band portion being insertable, in use, successively through said through holes to define a loop to enclose one or more elongate elements and having a latching portion adapted for cooperably engaging projection means of said body portion for securing said loop, characterised in that said resilient legs extend from respective side surfaces of said strut portion and in that said wall portion is provided with projection means for cooperably engaging said latching portion inserted through said through-hole whereby said loop is securely held.

Preferably, the wall portion comprises a first part extending transversely from said strut portion and having said through-hole defined therein and a second part extending from said first part toward said body portion, said projection means being disposed on said second part.

Preferably, the first part extends from a free end of said strut portion.

Preferably, the through-holes are arranged such that each has a surface disposed in the same plane as a surface of said strut portion from which said first part extends.

Preferably, a surface of the second part on which said projection means is provided is in the same plane as the surface of said through-hole which is disposed furthest from said strut portion.

Preferably, the latching portion comprises a plurality of depressions in a surface of the band portion.

Preferably, the respective projection means of the wall and body portions are sized such that when cooperably engaging said latching surface of said band portion in use of the tie, the or each projection thereof is of substantially equal height.

Preferably, the projection means comprises at least one projection disposed in said through-hole, the or each projection being cooperable with said through-hole to define a groove on either side thereof and wherein said band portion is provided with a guide portion comprising an elongate depression for receiving the or each projection substantially without interference and defining respective guide portions which are received in said grooves.

In order that the invention may be well understood, an embodiment thereof, which is given by way of example only, will now be described with reference to the accompanying drawings in which:
Fig. 1 is a plan view of an embodiment of a tie according to the present invention;
Fig. 2 is a front view of the tie of Fig. 1;
Fig. 3 is a side view of the tie of Fig. 2;
Fig. 4 is an opposite side view of the tie of Fig. 2;
Fig. 5 is a cross-sectional view of the tie of Fig. 1;
Fig. 6 is a cross-sectional view of the tie of Fig. 1;
Fig. 7 is a cross-sectional view along VII-VII in Fig. 6; and
Fig. 8 is a cross-sectional view of the tie mounted to a panel while holding a harness.

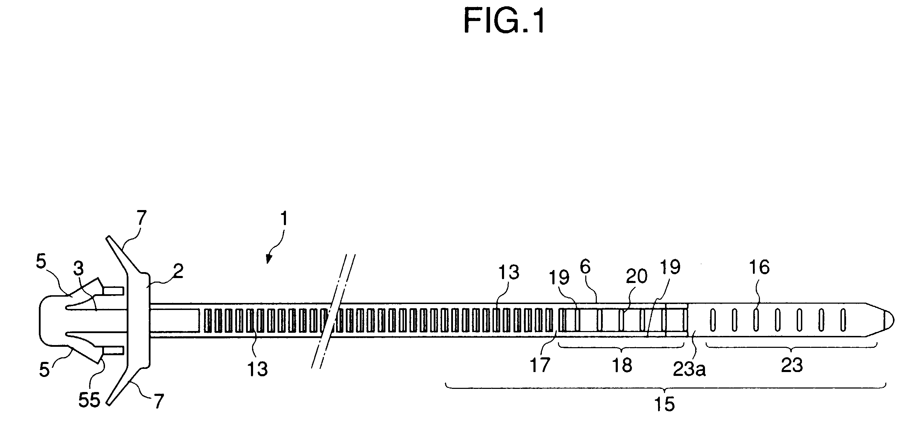

Figs. 1 to 8 show an embodiment of the present invention, in which reference numeral 1 designates a tie for mounting an elongate element or elements hereinafter referred to as a harness clip. The harness clip 1 will be described with reference to mounting of a harness 14. It will, however, be understood that the clip is equally suitable for mounting other elongate elements or a plurality of elongate elements.

The harness clip 1 comprises a body portion 2, an elongate band portion 6, a strut portion 3, a wall portion comprising a first part 4 and a second part 30, resilient legs 5 and resilient wings 7, all of which are integrally formed of a synthetic resin.

The band portion 6 extends from one face of the body portion 2, and the strut portion 3 projects from the opposite face of the body portion 2. The wall portion first part 4 projects downwardly, as viewed in the figures from the free end of the strut portion 3.

A resilient wing 7 is provided on the two side surfaces of the body portion 2. The wings 7 are deformed when coming into contact with a panel 10 of a car or the like. A through-hole 8 is provided generally centrally in the body portion 2.

Projection means in the form of stopper claws 9 which are resiliently deformable in the direction of the wall portion are disposed within the through-hole 8.

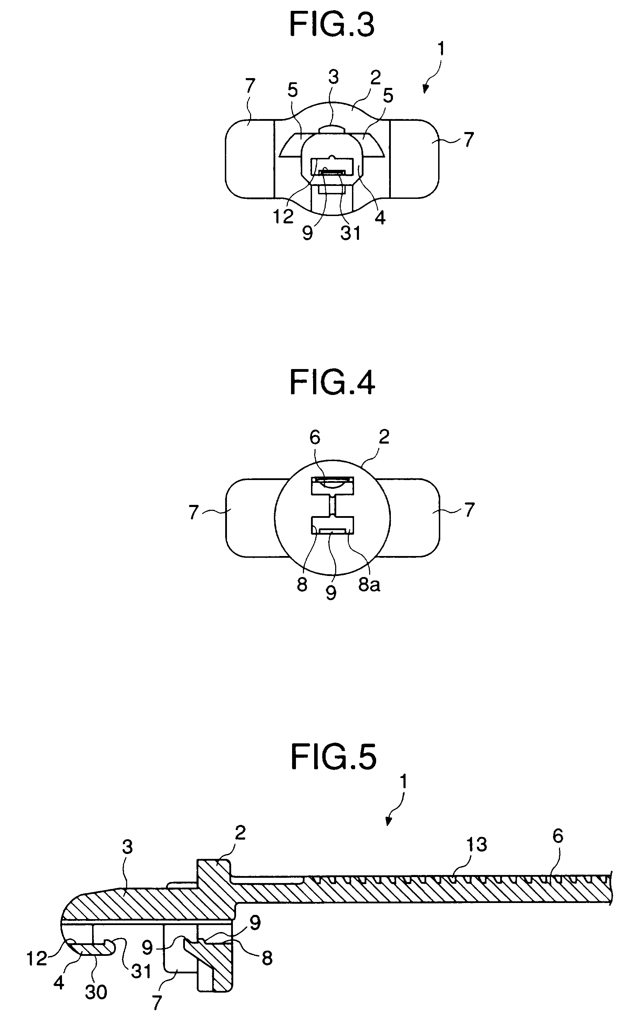

As shown in Fig. 4, the stopper claws 9 each have a width less then that of the through-hole 8 and are arranged such that a groove 8a of a predetermined width is defined on either side thereof.

In the present embodiment, as shown in Fig. 5, the strut portion 3 is arranged such that the upper surface of the through-hole 8 and the lower surface of the strut portion 3 are on the same plane. That is, the strut portion 3 is offset upwardly from the centre position of the body portion 2. This is in order to avoid interference between the band portion 6 and the strut portion 3 when the band portion 6 is inserted into the through-hole 8, as will be described later.

A respective resilient leg 5 is disposed on either side surface of the strut portion 3. The resilient legs 5 extend from the distal end region of the strut portion 3 toward the body portion 2 in opposition to the resilient wings 7.

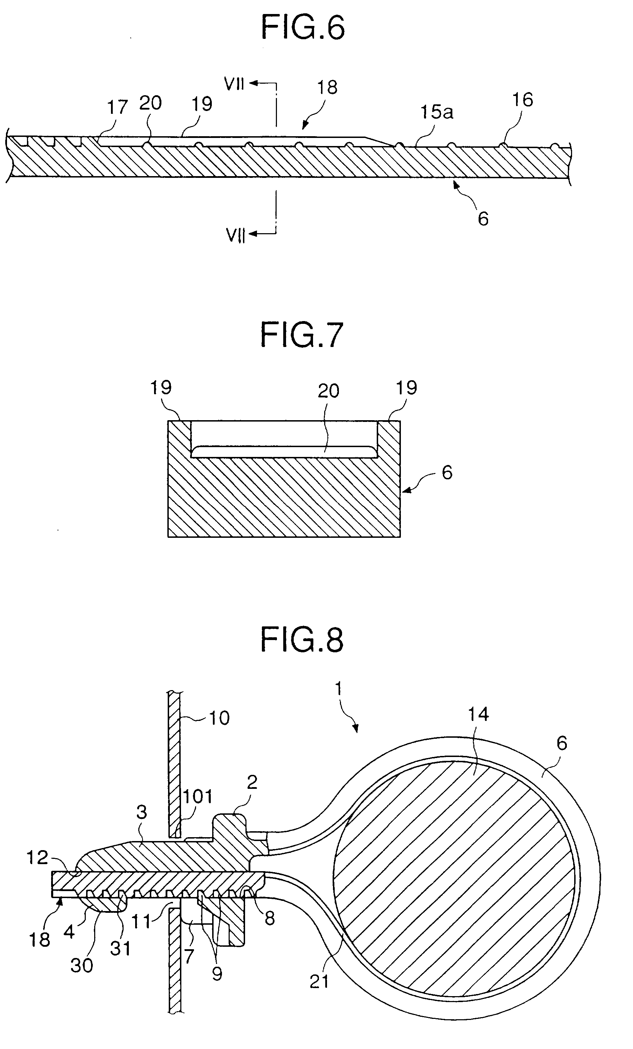

A step portion 55 is provided at the distal end of each leg 5 so as to be engageable with a peripheral edge portion 101 of a mount hole 11 formed in the panel 10 as will be described in more detail below with reference to Figure 8.

When the harness clip 1 is inserted in the mount hole 11 in the panel 10, the legs 5 and the wings 7 cooperate to pinch, or grip around, the peripheral edge portion 101 of the mount hole 11 so as to fix the harness clip 1 to the panel 10.

The legs 5 are offset from the through-hole 8 in order to avoid interference with the band portion 6 when inserted through the hole 8. In the embodiment, the lower surface of each leg 5 is disposed in the same plane as the lower surface of the strut portion 3.

The wall portion first part 4 extends downwardly, as viewed in the figures, and perpendicular to the axial direction of the strut portion 3. A through-hole 12 is defined in the wall portion first part 4, which hole 12 is in axial alignment with the through-hole 8.

As with the through-hole 8, the lower surface of the strut portion 3 and the upper surface of the through-hole 12 are disposed in the same plane in order to avoid interference between the band portion 6 and the strut portion 3 and legs 5 when the band portion is inserted in the through-holes 8, 12.

The wall portion 4, 30 is arranged such that when the band portion 6 is inserted into the through-holes 8, 12 the leading end portion of the band portion 6 is held and supported as shown in Figure 8.

The wall portion second part 30 extends from the lower end of the first part 4 toward the body portion 2 and is perpendicular thereto, as shown in Fig. 5 and other drawings.

The upper surface of the wall portion second part 30 is disposed in the same plane as the lower surface (i.e. the surface disposed furthest from the strut portion) of the through-hole 12.

Projection means in the form of a lock piece 31 which is integral with the upper surface of the wall portion second part 30 is disposed at the free end thereof.

The band portion 6 comprises a latching portion 13 adapted for cooperably engaging the respective projection means 9, 31 of the body and wall portions.

The latching portion 13 comprises grooves, or depressions, having a cross section substantially matching that of the stopper claws 9 and lock piece 31 so as to be capable of meshing with the pair of stopper claws 9, 9 and the lock piece 31.

As shown in Fig. 3, the lock piece 31 is not quite as wide as the stopper claws 9 and has a height lower than the height of the stopper claws 9 before engagement with the latching portion. The claws 9 and lockpiece 31 are sized such that when engaged with the depressions of the latching portion 13 in use of the tie, they are of substantially the same height.

The latching portion 13 is so arranged that when the band portion 6 is inserted into the through-hole 8 and thereafter into the through-hole 12 to be fastened, the depressions thereof mesh with the stopper claws 9 in the through-hole 8 and the lock piece 31, thereby stopping movement of the band portion 6 while holding the harness 14.

It will be appreciated that the provision of depressions in the band portion 6 to form its latching portion obviates the need to increase the overall thickness of the band portion by forming claws thereon such as those of the harness clip disclosed in UM63-22410.

The band portion 6 holds the harness 14 by defining a loop therearound when inserted into said through-holes 8, 12.

It will be appreciated that the width of the band portion 6 is equal to or slightly less than the width of the through-holes 8, 12 to allow insertion therein.

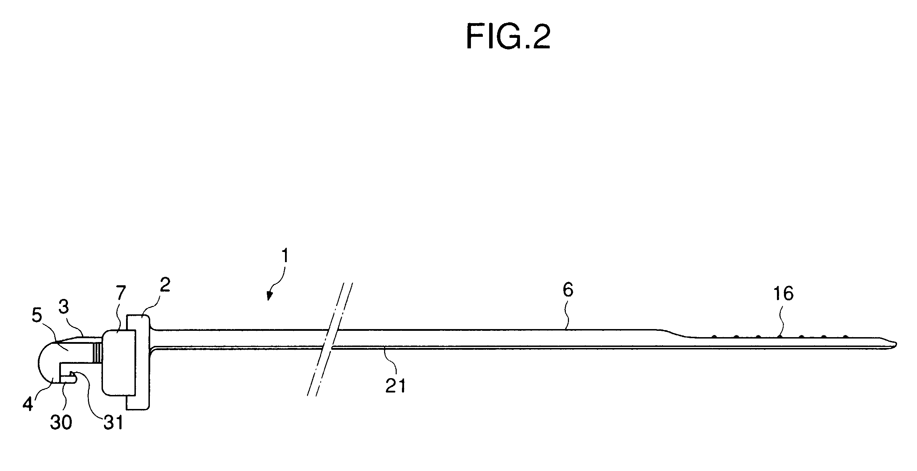

A leading end portion 15 of the band portion 6, as shown in Figs. 1 and 2, comprises a fastening control portion 23 which is of reduced thickness relative to the latching portion 13. A plurality of small projections 16 are formed at predetermined intervals on the fastening control portion 23, which functions as a temporary stop upon mounting of the harness as described below and as a slip stop in fastening the band portion.

The leading end portion 15 further comprises an insertion guide portion 18, as shown in Fig. 1, Fig. 6, and Fig. 7, disposed between the end 23a of the fastening control portion 23 and the end 17 of the latching portion 13.

This insertion guide portion 18, as shown in Fig. 7, has contact portions 19, 19 at either side thereof which have an upper surface which is level with the upper surface of the latching portion 13.

A depression is formed centrally in the insertion guide portion 18 between the contact portions 19 and in the area of the depression, the insertion guide portion has the same thickness as the fastening control portion 23.

The width of the contact portions 19 is less than the width of the grooves 8a.

A plurality of evenly spaced projections 20 are disposed in the depression of the insertion guide portion 18.

A rib 21 extends lengthwise the on surface of the band portion opposite to the surface provided with the depressions of the latching portion for holding the harness 14. A continuous groove 22 having a cross-section which matches that of the rib 21 is provided in the lower surface of the strut portion 3 and the respective upper surfaces of the through-holes 8, 12.

Use of the harness clip 1 will now be described with particular reference to Fig. 8. Firstly, the harness 14 is brought into the region of the rib 21 and then the band portion leading portion 15 is inserted into the through-hole 8 of the body portion 2.

Subsequently, the leading end portion 15 is pushed through the through-hole 8 so as to move forward along the lower surface of the strut portion 3. As insertion of the band portion is continued, the leading end portion 15 contacts the upper surface of the wall portion second part 30 by which it is guided toward the through-hole 12 in the wall portion first part 4, thereby ensuring that when the leading end portion 15 exits the through-hole 8 it feeds into the through-hole 12.

It will be appreciated that the engagement of the rib 21 with the groove 22 formed on the upper surface of through-hole 8, the lower surface of the strut portion 3 and the upper surface of the through-hole 12 prevents lateral deviation of the band leading portion 15 as it advances toward the through-hole 12.

If the fastening process is stopped at this stage, projections 16 of the fastening control portion 23 lightly engage with the stopper claws 9 to stop the band portion 6 from slipping out, thus functioning as a temporary stop.

To continue the fastening process, the fastening control portion 23 which by now projects from the rear of the through-hole 12 is pulled, drawing the insertion guide portion 18 through the through-hole 8 and the through-hole 12.

The projections 16 of the fastening control portion 23, serve as slip stops facilitating the fastening process.

When the insertion guide portion 18 passes through the through-holes 8, 12, only the contact portions 19 are in contact with wall surfaces of the through-holes.

Particularly in the through-hole 8, the two contact portions 19 slide in contact with the bottom of the respective grooves, but the central depression does not contact the stopper claws 9, which decreases the resistance to, and thereby eases, the insertion of the band portion 6.

Further pulling of the fastening control portion 23 draws the latching portion through the through-holes 8, 12 so that the latching portion depressions mesh with the claws 9 and lock piece 31 whereby the harness 14 is securely held by the band portion 6.

Since the leading portion 15 of the band portion 6 which projects from the rear of the through-hole 12 is now not required, it is preferably cut in the region at which is exits the through-hole 12, as shown in Fig. 8.

In this fastened condition, the stopper claws 9 are resiliently deformed to firmly mesh with depressions of the latching portion 13, thereby stopping movement of the band portion 6 in the through hole 8. Additionally, the lock piece 31 meshes with a depression of the latching portion.

It will be appreciated that the clip can be made compact since the strut portion 3 and legs 5 are disposed so as not to interfere with the band portion 6 and therefore the sizing of the legs 5 is independent of the dimensions of the through-hole 12, unlike the prior art harness clip of 63-22410.

Furthermore, the latching portion 13 comprises depressions in the band portion 6 and not projections thereon whereby the overall thickness of the band portion 6 can be made considerably smaller than the conventional examples described above. This in turn means that dimensions of the through-holes 8, 12 can be correspondingly smaller.

Although in the above embodiment the strut portion 3 and legs 5 are upwardly offset from the axial centre of the body portion 2, the invention is by no means limited to this example. The strut portion 3 and legs 5 may be positioned wherever they do not interfere with the insertion of the band portion 6. Also, the lower surfaces of the legs 5 do not have to be in the same plane as the lower surface of the strut portion 3.

Further, in the embodiment the respective upper surfaces of the through-holes 8, 12 and the lower surface of strut portion 3 are in the same plane. This is the optimum arrangement in respect of ease of insertion of the band portion 6. However, this is not essential and the upper surfaces of through-hole 8 may be disposed below the lower surface of the strut portion 3 if desired.

In this specification, the terms "upward", "downward", "upper surface", "lower surface", etc are used as means of convenience for specifying positional relationships as shown in the figures and should not be taken as limiting.

It will be understood that the body portion projection means may comprise one or more single stopper claws 9 and that the shape, pitch and number of projections can be varied as required.

It will be appreciated that in the embodiment, the band portion meshes with and is held by the stopper claws and the lock piece at two spaced apart regions (preferably, the distance between the through-holes is relatively large) when in the fastened state, whereby it is securely held and tensioned throughout its entire length. Also, because the portions of the band portion which have passed through the through-hole 8 are supported and held in the region of the through-hole 12 unintentional release of the portion can be surely prevented even if the harness clip is being inserted into a mount hole in a panel by an operative who is forced to grope blindly to find the mount hole. Thus, the harness clip is easier to use for the operative.

Additionally, by supporting the latching portion in the region of the through-hole 12, portions of the latching portion extending between the through-holes are held against the strut portion 3 thus enhancing the strength of the entire strut portion such that the harness clip is unlikely to be bent during insertion to a mounting hole.

A further advantage is that after the leading portion has passed through the through-hole in the body portion, the second part of the wall portion serves as a guide during insertion into the wall portion through-hole which permits rapid and sure insertion.

The embodiment as described above, can provide the following advantages over conventional harness clips:
(1) When the harness clip is being mounted in a hole in a panel, the band portion protruding through the body portion is prevented from being bent away from the strut portion. Thus, it does not interfere with the mount hole, enabling rapid and sure mounting.
(2) Since two spaced apart portions of the band portion are meshed and securely held in the fastened state of the clip, the tension in the band portion is held throughout its length. Also, if the distance between the through-holes is relatively large, the secured length of the band portion protruding through the body portion is relatively long and unintentional release of the band portion can be surely prevented while the clip is being installed in a hole in a panel even when the operative has to grope blindly to locate the mount hole.
(3) Since the band portion serves to enhance the strength of the strut portion in the fastened condition, as described above, the clip is unlikely to be bent during insertion in a mount hole.
(4) Since the wall portion second part serves as a guide while the band portion is being inserted into the wall portion through-hole, the insertion operation can be carried out rapidly and surely.
(5) Since the secured portions of the band portion are prevented from bending while the harness clip is being mounted into a hole in a panel, those portions do not interfere with the mount hole, which enables rapid and sure mounting.
(6) Since the strut portion and resilient legs are positioned so as not to interfere with the band portion when inserted into the through-holes and since the dimensions of the resilient legs are not affected by the dimensions of the wall portion through-hole, as opposed to the clip of UM63-22410, the clip can be made compact.
(7) Since the latching portion of the band portion comprises depressions in the band portion, the thickness of the band portion can be considerably reduced as compared with the conventional examples described above, and the dimensions of the through-holes can be correspondingly reduced further enabling the clip to be made compact.

## Claims

1. A tie for mounting one or more elongate elements, the tie (1) comprising a body portion (2) having resilient wing means (7), an elongate band portion (6) extending from a face of said body portion, a strut portion (3) extending from said body portion oppositely of said band portion, two resilient legs (5) connected with said strut portion and a wall portion (4, 30) provided on said strut portion, said legs being cooperable with said wing means for gripping around an aperture in use of the tie, said body portion and wall portion being provided with a respective through-hole (8, 12) which through-holes are substantially aligned, said band portion being insertable, in use, successively through said through holes (8, 12) to define a loop to enclose one or more elongate elements and having a latching portion (13) adapted for cooperably engaging projection means (9) of said body portion for securing said loop, characterised in that said resilient legs (5) extend from respective side surfaces of said strut portion (3) and in that said wall portion (4, 30) is provided with projection means (31) for cooperably engaging said latching portion inserted through said through-hole (12) whereby said loop is securely held.

2. A tie as claimed in claim 1, wherein said wall portion (4, 30) comprises a first part (4) extending transversely from said strut portion and having said through-hole (12) defined therein and a second part (30) extending from said first part toward said body portion (2), said projection means (31) being disposed on said second part.

3. A tie as claimed in claim 2, wherein said first part (4) extends from a free end of said strut portion (3).

4. A tie as claimed in claim 2 or 3, wherein said through-holes (8, 12) are arranged such that each has a surface disposed in the same plane as a surface of said strut portion from which said first part extends.

5. A tie as claimed in claim 2, 3 or 4, wherein a surface of said second part (30) on which said projection means (31) is provided is in the same plane as the surface of said through-hole (12) which is disposed furthest from said strut portion.

6. A tie as claimed in any one of the preceding claims, wherein said latching portion comprises a plurality of depressions in a surface of the band portion.

7. A tie as claimed in any one of the preceding claims, wherein said projection means (9, 31) are sized such that when cooperably engaging said latching surface of said band portion in use of the tie, the or each projection thereof is of substantially equal height.

8. A tie as claimed in any one of the preceding claims, wherein said projection means (9) comprises at least one projection disposed in said through-hole (8), the or each projection being cooperable with said through-hole to define a groove (8a) on either side thereof and wherein said band portion (6) is provided with a guide portion (18) comprising an elongate depression for receiving the or each projection substantially without interference and defining respective guide portions (19) which are received in said grooves (8a).

## Patentansprüche

1. Binder zum Anbringen eines oder mehrerer länglicher Elemente, wobei der Binder (1) einen Körperabschnitt (2) mit federnden Flügeleinrichtungen (7), einen länglichen Bandabschnitt (6), der sich von einer Stirnseite des Körperabschnitts aus erstreckt, einen Strebenabschnitt (3), der sich von dem Körperabschnitt aus entgegengesetzt zu dem Bandabschnitt erstreckt, zwei federnde Schenkel (5), die mit dem Strebenabschnitt verbunden sind, sowie einen Wandabschnitt (4, 30) umfaßt, der an dem Strebenabschnitt vorhanden ist, wobei die Schenkel mit den Flügeleinrichtungen zusammenwirken können, um beim Gebrauch des Binders um eine Öffnung herumzugreifen, der Körperabschnitt und der Wandabschnitt jeweils mit einem Durchgangsloch (8, 12) versehen sind, wobei die Durchgangslöcher im wesentlichen fluchtend sind, der Bandabschnitt in Funktion allmählich durch die Durchgangslöcher (8, 12) hindurch eingeführt werden kann, so daß eine Schlaufe entsteht, die ein oder mehrere längliche Elemente umschließt, und einen Einrastabschnitt (13) hat, der zusammenwirkend mit einer Vorsprungseinrichtung (9) des Körperabschnitts in Eingriff kommt, um die Schlaufe festzuhalten, **dadurch gekennzeichnet**, daß sich die federnden Schenkel (5) von entsprechenden Seitenflächen des Strebenabschnitts (3) aus erstrekken, und daß der Wandabschnitt (4, 30) mit einer Vorsprungseinrichtung (31) versehen ist, die mit dem durch das Durchgangsloch (12) hindurch eingeführten Einrastabschnitt zusammenwirkend in Eingriff kommt, so daß die Schlaufe festgehalten wird.

2. Binder nach Anspruch 1, wobei der Wandabschnitt (4, 30) einen ersten Teil (4), der sich quer von dem Strebenabschnitt aus erstreckt und ein darin ausgebildetes Durchgangsloch aufweist, sowie einen zweiten Teil (30) umfaßt, der sich von dem ersten Teil aus auf den Körperabschnitt (2) zu erstreckt, wobei die Vorsprungseinrichtung (31) an dem zweiten Teil angeordnet ist.

3. Binder nach Anspruch 2, wobei sich der erste Teil (4) von einem freien Ende des Strebenabschnitts (30) aus erstreckt.

4. Binder nach Anspruch 2 oder 3, wobei die Durchgangslöcher (8, 12) so angeordnet sind, daß jedes eine Fläche aufweist, die in der gleichen Ebene wie die Fläche des Strebenabschnitts angeordnet ist, von der aus sich der erste Teil erstreckt.

5. Binder nach Anspruch 2, 3 oder 4, wobei eine Fläche des zweiten Teils (30), an der die Vorsprungseinrichtung (31) vorhanden ist, in der gleichen Ebene liegt wie die Fläche des Durchgangslochs (12), das am weitesten von dem Strebenabschnitt entfernt angeordnet ist.

6. Binder nach einem der vorangehenden Ansprüche, wobei der Einrastabschnitt eine Vielzahl von Vertiefungen in einer Fläche des Bandabschnitts umfaßt.

7. Binder nach einem der vorangehenden Ansprüche, wobei die Vorsprungseinrichtungen (9, 31) so bemessen sind, daß, wenn sie beim Gebrauch des Binders zusammenwirkend mit der Einrastfläche des Bandabschnitts in Eingriff kommen, der bzw. jeder Vorsprung derselben im wesentlichen gleiche Höhe hat.

8. Binder nach einem der vorangehenden Ansprüche, wobei die Vorsprungseinrichtung (9) wenigstens einen Vorsprung umfaßt, der in dem Durchgangsloch (8)angeordnet ist, wobei der bzw. jeder Vorsprung mit dem Durchgangsloch zusammennen, so daß eine Nut (8a) auf beiden Seiten desselben entsteht, und wobei der Bandabschnitt (6) mit einem Führungsabschnitt (18) versehen ist, der eine längliche Vertiefung umfaßt, die den bzw. jeden Vorsprung im wesentlichen ohne Überlagerung aufnimmt und entsprechende Führungsabschnitte (19) bildet, die in den Nuten (8a) aufgenommen werden.

## Revendications

1. Lien de montage d'un ou de plusieurs éléments allongés, le lien (1) comprenant un élément de corps (2) ayant des moyens élastiques d'ailes (7), un élément de bande allongée (6) partant d'une surface dudit élément de corps, un élément d'entretoise (3) partant dudit élément de corps sur le côté opposé à celui dudit élément de bande, deux branches élastiques (5) reliées audit élément d'entretoise et un élément de paroi (4, 30) placé sur ledit élément d'entretoise, lesdites branches pouvant coopérer avec lesdits moyens d'ailes pour effectuer un serrage autour d'un trou à l'utilisation du lien, ledit élément de corps et ledit élément de paroi comportant un trou respectif le traversant de part en part (8, 12), lesdits trous traversants étant sensiblement à l'alignement, ledit élément de bande pouvant être introduit à l'utilisation successivement dans lesdits trous traversants(8, 12) pour constituer une boucle destinée à entourer un ou plusieurs éléments allongés et ayant une partie de blocage (13) destinée à se placer en coopération contre des moyens en saillie (9) dudit élément de corps pour fixer ladite boucle, caractérisé en ce que lesdites branches élastiques (5) partent de surfaces latérales respectives dudit élément d'entretoise (3) et en ce que ledit élément de paroi (4, 30) comporte des moyens en saillie (31) destinés à se placer en coopération contre ladite partie de blocage introduite dans ledit trou traversant (12) de manière à tenir fiablement ladite boucle.

2. Lien selon la revendication 1, dans lequel ledit élément de paroi (4, 30) comprend une première partie (4) partant perpendiculairement dudit élément d'entretoise et dans laquelle ledit trou traversant(12) est réalisé, ainsi qu'une seconde partie (30) partant de ladite première partie et orientée vers ledit élément de corps (2), lesdits moyens en saillie (31) étant disposés sur ladite seconde partie.

3. Lien selon la revendication 2, dans lequel ladite première partie (4) part d'une extrémité libre dudit élément d'entretoise (3).

4. Lien selon la revendication 2 ou 3, dans lequel lesdits trous traversants (8, 12) sont réalisés de manière que chacun comprenne une surface disposée dans le même plan qu'une surface dudit élément d'entretoise dont part ladite première partie.

5. Lien selon la revendication 2, 3 ou 4, dans lequel une surface de ladite seconde partie (30) sur laquelle se trouvent lesdits moyens en saillie (31) est placée dans le même plan que la surface dudit trou traversant (12) qui est la plus éloignée dudit élément d'entretoise.

6. Lien selon l'une quelconque des revendications précédentes, dans lequel ladite partie de blocage comprend plusieurs creux dans une surface de l'élément de bande.

7. Lien selon l'une quelconque des revendications précédentes, dans lequel lesdits moyens en saillie (9, 31) sont dimensionnés de manière que lorsqu'ils sont en prise en coopération avec ladite surface de blocage dudit élément de bande à l'utilisation du lien, la ou lesdites saillies de ce dernier soient sensiblement de même hauteur.

8. Lien selon l'une quelconque des revendications précédentes, dans lequel lesdits moyens en saillie (9) comprennent au moins une saillie disposée dans ledit trou traversant (8), la ou chaque saillie pouvant coopérer avec ledit trou traversant pour délimiter une rainure (8a) sur chacun de ses côtés et dans lequel ledit élément de bande (6) comporte une partie de guidage (18) comprenant un creux allongé destiné à loger la ou chaque saillie sensiblement sans interaction et constituant des parties respectives de guidage (19) qui se logent dans lesdites rainures (8a).
